# EUROPÄISCHE PATENTSCHRIFT

(11) **EP 2 363 302 B1**
(45) Veröffentlichungstag und Bekanntmachung des Hinweises auf die Patenterteilung: **09.03.2016**
(21) Anmeldenummer: 10015757.7
(22) Anmeldetag: 17.12.2010
(51) Int. Cl.: B60B 35/16, B60G 9/00, B60G 11/04, B60G 11/113

(54) **Vorrichtung zur Anbindung eines Federelements an einer Nutzfahrzeugachse**
Device for connecting a suspension element to a commercial vehicle axle
Dispositif de liaison d'un élément de ressort sur un essieu de véhicule utilitaire

(30) Priorität: 25.02.2010 DE 102010009304
(43) Veröffentlichungstag der Anmeldung: 07.09.2011
(73) Patentinhaber: MAN Truck & Bus AG, 80995 München (DE)
(72) Erfinder: Reiter, Thomas, 84174 Eching (DE); Simon, Bernhard, 85435 Erding (DE)

(56) Entgegenhaltungen:
- EP-A1- 0 625 440
- EP-A1- 1 439 081
- WO-A1-2008/109585
- DE-A1-102006 017 421
- US-A- 3 844 579
- US-A- 4 227 716
- US-A- 4 375 896
- US-A1- 2005 023 788
- US-A1- 2005 168 057

## Beschreibung

Die Erfindung betrifft ein Nutzfahrzeug, mit einem Achskörper nach dem Oberbegriff des Patentanspruchs 1.

Aus der DE 10110495 A1 ist eine Achsanbindung für gefederte Fahrzeugachsen bekannt. Die Achsanbindung weist einen vorzugsweise als Vierkantrohr mit abgerundeten Kanten ausgebildeten Achskörper auf. Es sind Längslenker oder Blattfedern vorgesehen, die den Achskörper an seiner Ober- oder Unterseite kreuzen. Weiterhin sind Zugstangen angeordnet, die zu den Längslenkern bzw. Blattfedern wie auch zu dem Achskörper quer verlaufen und die genannten Teile gegeneinander auseinander ziehen. Die Zugstangen erstrecken sich entlang der Seitenwände des Achskörpers und stützen sich an einem außen an dem Achskörper anliegenden Achslappen ab. Zusätzlich sind die Zugstangen entlang ihrer Längserstreckung mit mindestens einer Biegung oder Kröpfung versehen. Nachteilig ist, dass eine derartige Befestigung des Federelements am Achskörper den Achskörper im Deckenbereich mit hohen Vertikallasten belastet. US-A-2005/0023788 offenbart die Merkmale des Oberbegriffs des Anspruchs 1. Zum technologischen Hintergrund ist ferner zu verweisen auf die EP 0 625 444 A1, WO 2008/109585 A1, DE 10 2006 017421 A1, US 4 227 716 A, US 2005/168057 A1 und US 3 844 579 A.

Der Erfindung liegt die Aufgabe zugrunde, eine Federanbindung an einen Achskörper zu schaffen, bei der die Krafteinleitung des Federelements in den Achskörper günstiger verläuft und die Struktur des Achskörpers dadurch entlastet wird und beider eine positionsgenaue Anordnung der Spannbrücke und/oder des widerlagers gegenüber dem Achskörper ermöglicht wird.

Die Aufgabe wird gelöst durch die Merkmale des Patentanspruchs 1.

Die Erfindung umfasst eine Spannbrücke, die wenigstens zwei Schenkel umfasst, die über wenigstens einen Steg miteinander verbunden sind, wobei sich ein Achskörper zwischen den Schenkeln erstreckt. Im verbauten Zustand überspannt die Spannbrücke den Achskörper. Das Federelement ist dabei mit Hilfe von Spannvorrichtungen auf der Oberseite des Stegs der Spannbrücke fixiert. Die Spannvorrichtungen sind am Widerlager oder am Fixierungsvorsprung des Achskörpers befestigt. Die Spannbrücke ist dem Außenumfang des Achskörpers der Nutzfahrzeugachse angepasst. Die Erfindung ermöglicht die Anordnung einer genormten Spannbrücke an Achskörpern mit unterschiedlicher Form und abweichendem Durchmesser, sodass die Spannbrücke an Achskörpern mit hohlem Querschnitt, U-Profilen oder auch Doppel-T-Profilen einsetzbar ist. Die Aufzählungen sind dabei nur beispielhaft und in keiner Weise ausschließlich gemeint. Die erfindungsgemäße Spannbrücke kann vielmehr mit jeder möglichen Achskörperform kombiniert werden. Es ist dabei unerheblich, ob es sich um eine angetriebene oder eine nicht angetriebene Achse handelt. Die Spannbrücke erweist sich als vorteilhaft, da sie sie hohen Vertikalkräften widersteht und weiteren Aufgaben wie z. B. der Anbindung der Längslenker, der Halterung der Stoßdämpfer und der Anbindung der Stabilisatoren gerecht wird. Die Erfindung ermöglicht die Anordnung unterschiedlichster Federelemente am Achskörper. Denkbar sind dabei z. B. Blattfedern, Schraubenfedern, Luttfedern oder hydropneumatische Federungen z.B. in Form von Hydraulikzylindern. Nach Maßgabe der Erfindung ist der Steg in verbautem Zustand vom Achskörper beabstandet.

Erfindungsgemäß ist vorgesehen, dass an der vom Steg abgewandten Seite des Achskörpers ein Widerlager angeordnet ist, das den Achskörper überspannt und vorzugsweise dabei die Schenkel miteinander verbindet. Das Widerlager dient der zusätzlichen Verankerung der Spannbrücke am Achskörper. Hierzu weist das Widerlager seitliche Wände auf, die in einem Winkel zur Basis des Widerlagers verlaufen und mit den Schenkeln der Spannbrücke und/oder dem Steg der Spannbrücke verbindbar sind. Zur verliersicheren Verbindung zwischen dem Widerlager und der Spannbrücke können das Widerlager und die Spannbrücke miteinander verschraubt oder verspannt sein. Natürlich sind auch andere Verbindungsmöglichkeiten zwischen Widerlager und der Spannbrücke möglich.

Am Fixierungsvorsprung und optional am Widerlager und/oder an der Spannbrücke ist jeweils wenigstens eine Zentriereinrichtung vorgesehen, die eine positionsgenaue Anordnung der Spannbrücke gegenüber dem Widerlager oder eine positionsgenaue Anordnung der Spannbrücke bzw. des Widerlagers gegenüber dem Achskörper ermöglichen. Darüber hinaus erweist es sich als vorteilhaft, ein Federelement, das auf dem Steg der Spannbrücke aufsitzt, zusätzlich zu seiner Verbindung mit der Spannbrücke auch mit dem Widerlager zu verbinden und zu verspannen. Hierdurch erhöht sich die Festigkeit der montierten Einheit aus Achsbrücke und Federelement.

Nach einer anderen Ausführungsform der Erfindung ist der Fixierungsvorsprung im Bereich der Nulllinie des Achskörpers, also im Bereich der geringsten Biegung am Achskörper angeordnet. Es ist denkbar, dass die Fixierungsvorsprünge horizontal oder gewinkelt quer zur Fahrtrichtung am Achskörper befestigt sind. Die Fixierungsvorsprünge können in einem Stück mit dem Achskörper gegossen sein oder aber an den Achskörper angeschmiedet sein.

Erfindungsgemäß ist vorgesehen, dass eine vom Federelement ausgehende vertikale Kraft über den Schenkel der Spannbrücke in den Fixierungsvorsprung des Achskörpers gerichtet ist. Der Rücken des Achskörpers wird auf diese Weise vom Eintrag hoher Vertikallasten befreit, da die auf den Achskörper einwirkende Druckbelastung homogen und seitlich in den Achskörper einfließt. Aufgrund der Tatsache, dass die Schenkel mit den Fixierungsvorsprüngen verbunden sind, erfolgt die Krafteinleitung des Federelements nicht direkt von oben auf den Rücken des Achskörpers. Der Rücken des Achskörpers wird von der vom Federelement ausgehenden vertikalen Druckbelastung entlastet, was zu einer erheblichen Verlängerung der Lebensdauer des Achskörpers führt. Eine verbesserte Krafteinleitung von Vertikalkräften aus dem Federelement in den Achskörper ermöglicht die Verwendung von Achskörpergrundmodellen, die nicht alle Funktionen wie z. B. erhöhte Variabilität erfüllen müssen und trotzdem die erforderliche Festigkeit aufweisen. Besonders günstig erweist sich die Anordnung von Fixierungsvorsprüngen an Achskörpern mit trapezförmigem Querschnitt. Der Querschnitt des Achskörpers nimmt dabei von oben nach unten in der Breite zu. Dabei fließt die vom Federelement ausgehende vertikale Kraft über die Schenkel der Spannbrücke in die Fixierungsvorsprünge und von dort in den breiteren unteren Bereich des Achskörpers eingeleitet. Bei Achskörpern aus Gusseisen kann gezielt im Rücken des Achskörpers eine Druckbelastung und im unteren Bereich des Fixierungsvorsprungs eine Zugbelastung aufgebracht werden. Die Gussform sowie der trapezförmige Querschnitt des Achskörpers begünstigt die seitliche Einleitung vertikaler Kräfte in den Achskörper, da die Vertikalkräfte über die Fixierungsvorsprünge direkt in die Gusswand einleitbar sind.

Zur Optimierung der Krafteinleitung in den Achskörper ist es weiterhin denkbar, den Fixierungsvorsprung keilförmig auszubilden, wobei das obere, dem Steg der Spannbrücke zugewandte Ende des Fixierungsvorsprungs eine Aufstandsfläche für den Schenkel bildet, wogegen das untere Ende des Fixierungsvorsprungs zu dem breiteren unteren Bereich des Achskörpers hin verjüngt ist.

Eine weitere Ausführungsform der Erfindung sieht vor, dass die Schenkelunterseite und das Profil des Fixierungsvorsprungs, auf dem der Schenkel aufsteht derart ausgebildet sind, dass ein gegenseitiger Eingriff zwischen der Schenkelunterseite und dem Fixierungsvorsprung möglich ist. Hierdurch wird eine verrutschsic 3a Befestigung des Trägerprofils am Fixierungsvorsprung gewährleistet.

Weitere Einzelheiten und Vorteile der Erfindung ergeben sich aus der nachfolgenden Beschreibung der zugehörigen Zeichnung, in der mehrere Ausführungsformen einer erfindungsgemäß ausgebildeten Anbindung eines Federelements an einen Achskörper einer Nutzfahrzeugachse dargestellt sind. Hierbei zeigen:
- Fig. 1: eine Anbindungsvorrichtung nach dem Stand der Technik,
- Fig. 2: einen Achskörper mit den erfindungsgemäßen Fixierungsvorsprüngen ,
- Fig. 3: einen Querschnitt durch eine Anbindungsvorrichtung an einem Achskör- per,
- Fig. 4: in Explosionsdarstellung einen Achskörper mit Fixierungsvorsprüngen und die Spannbrücke mit Widerlager,
- Fig. 5: einen Achskörper mit Anbindungsvorrichtung in Seitenansicht,
- Fig. 6: die erfindungsgemäße Anbindungsvorrichtung im verbauten Zustand mit einer Blattfederung,
- Fig. 7: entsprechend Fig. 3 einen Schnitt durch eine Anbindungsvorrichtung an einem Achskörper und
- Fig. 8: einen Längsschnitt durch einen Achskörper im Bereich der Anbindung des Federelements.

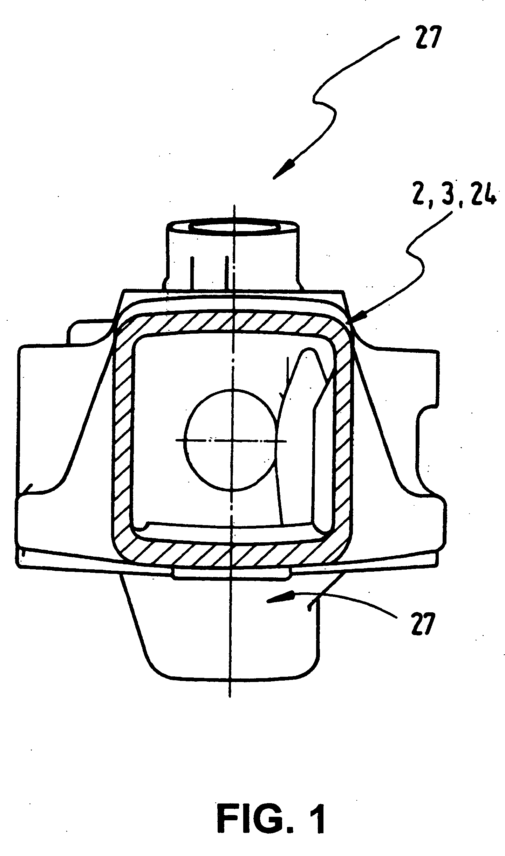

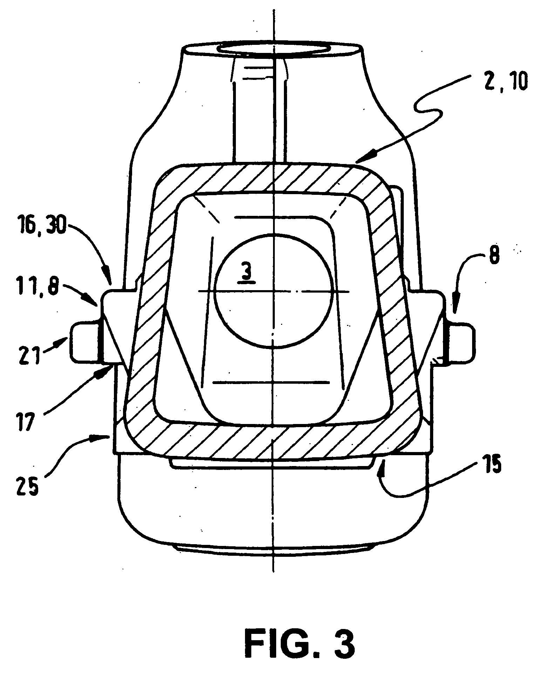

Fig. 1 zeigt eine Anbindungsvorrichtung eines Federelements (nicht gezeigt) an einem Achskörper 2 einer Nutzfahrzeugachse 3 zur Schwingungsentkopplung des Fahrgestellrahmens (nicht gezeigt) gegenüber der Fahrzeugachse 3 nach dem Stand der Technik. In Fig. 3 weist der Achskörper 2 eine in etwa rechtwinklige Form 24 auf, die die Fahrzeugachse 3 in sich aufnimmt. Mit Ziffer 27 ist eine Aufnahme für Radträger dargestellt.

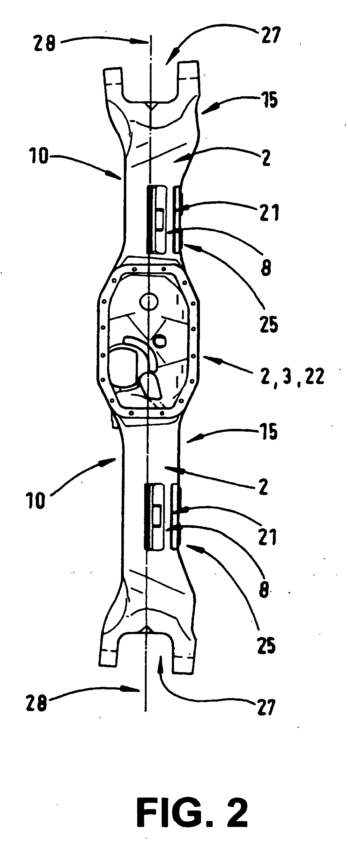

Fig. 2 zeigt in Seitenansicht den Achskörper 2 der Nutzfahrzeugachse 3 mit dem Ausgleichsachskessel 22 und den Fixierungsvorsprüngen 8. An den Fixierungsvorsprüngen 8 sowie parallel zu den Fixierungsvorsprüngen 8 am Achskörper 2 sind Zentriereinrichtungen 21, 25 vorgesehen, die eine positionsgenaue Anordnung der Spannbrücke 4 und des Widerlagers 9 gegeneinander und gegenüber dem Achskörper 2 ermöglichen. An den beiden Außenenden des Achskörpers 2 sind Aufnahmen 27 für die Radträger vorgesehen. Oberhalb der Fixierungsvorsprung 8 ist der Rücken 10 des Achskörpers 2 zu erkennen, dem gegenüber der untere Bereich des Achskörpers 2 mit Bezugsziffer 15 bezeichnet ist. Eine gedachte Linie 28 verläuft entlang des Fixierungsvorsprungs 8 und trennt den Achskörper 2 in einen Rücken 10 und einen unteren Bereich 15. Die gedachte Linie 28 markiert gleichzeitig die Nulllinie 11, nämlich den Bereich des Achskörpers 2 in dem die Biegung am geringsten ist.

Fig. 3 zeigt einen Schnitt durch den Achskörper 2 neben der Spannbrücke 4 bzw. dem Widerlager 9 der erfindungsgemäßen Anbindungsvorrichtung. In der Fig. 3 ist der Achskörper 2 trapezförmig ausgebildet und weist einen Rücken 10 sowie einen unteren Bereich 15 auf. Im Querschnitt gesehen verbreitert sich der Achskörper 2 vom Rücken 10 hin zum unteren Bereich 15. Innerhalb des Achskörpers 2 ist die Achse 3 des Nutzfahrzeugs zu erkennen. In axialer Richtung sind etwa in der Nulllinie 11 des Achskörpers 2 am Außenumfang des Achskörpers 2 Fixierungsvorsprünge 8 angebracht. Die Fixierungsvorsprünge 8 unterteilen den Achskörper 2 in einen Rücken 10 sowie einen unteren Bereich 15. Am oberen Ende 16 weist der Fixierungsvorsprung eine Standfläche 30 auf, auf der sich die Aufstandsfläche 18 des Schenkels 5 der Spannbrücke 4 (nicht gezeigt) abstützt. Zur Optimierung der vertikalen Krafteinleitung 41 des Federelements 1 über den Schenkel 5 der Spannbrücke 4 in den Fixierungsvorsprung 8 verjüngt sich der Fixierungsvorsprung 8 von seinem oberen Ende 16 hin zu seinem unteren Ende 17, sodass die Kraft in den sich nach unten verbreiternden Bereich 15 des Achskörpers 2 eingeleitet wird. Zur positionsgenauen Anordnung der Spannbrücke 4 am Achskörper 2 sind in Fig. 3 Zentriereinrichtungen 21 erkennbar. Unterhalb des unteren Bereichs 15 des Achskörpers 2 ist eine weitere Zentriereinrichtung 25 angeordnet, die der Positionierung des Widerlagers 9 gegenüber dem Achskörper 2 dient.

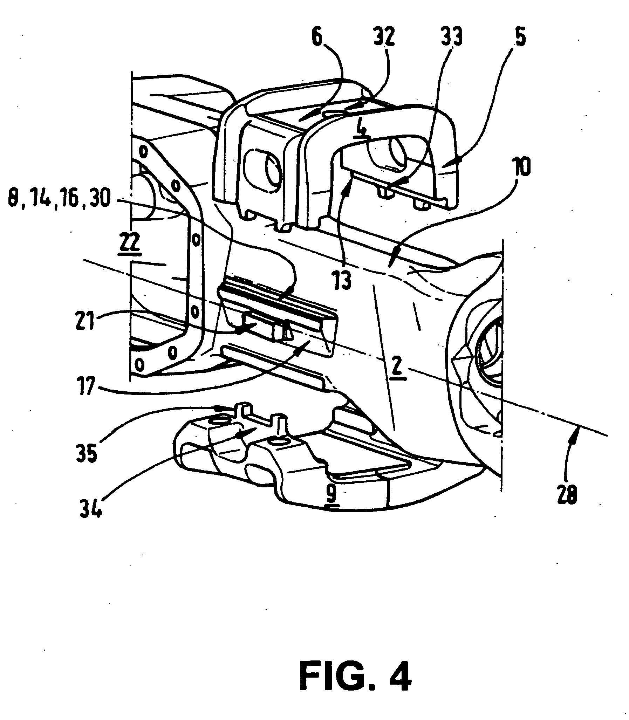

Fig. 4 zeigt in explosionsartiger Darstellung einen Achskörper 2 mit einer über dem Rücken 10 des Achskörpers 2 angeordneten Spannbrücke 4 und einem unterhalb des Achskörpers 2 erkennbaren Widerlager 9. Der Achskörper 2 weist dabei einen Ausgleichsachskessel 22 des Ausgleichsgetriebes auf sowie an seinem Außenende eine Aufnahme 27 für den Radträger. Entlang der gedachten Linie 28 erstreckt sich der Fixierungsvorsprung 8 am Außenumfang des Achskörpers 2. Das Profil 14 des Fixierungsvorsprungs 8 zeigt ein oberes Ende 16 und ein sich nach unten verjüngendes unteres Ende 17 sowie eine Zentriereinrichtung 21. In Fig. 4 sind die Schenkel 5 der Spannbrücke 4 zu erkennen, zwischen denen sich der Achskörper 2 erstreckt. Zwischen den Schenkeln 5 des Achskörpers 2 erstreckt sich zur Verbindung der Schenkel miteinander der Steg 6, der eine Aufnahmeeinrichtung 32 für ein nicht dargestelltes Federelement 1 aufweist. An den Unterseiten 13 der Schenkel 5 sind Aufstandsflächen für die Auflage der Schenkel 5 auf den Standflächen 30 des Fixierungsvorsprungs 8 erkennbar. Gleichfalls an den Schenkelunterseiten 13 sind Nasen 33 dargestellt, die der Positionierung der Schenkel 5 der Spannbrücke 4 an der Zentriereinrichtung 21 des Fixierungsvorsprungs 8 dienen. Für die Anlage des Widerlagers 9 am Achskörper 2 sind am Widerlager 9 Aufstandsflächen 34 angeordnet. Die Zentrierung des Widerlagers 9 gegenüber der Zentriereinrichtung 21 des Fixierungsvorsprungs 8 erfolgt über Nasen 35 des Widerlagers 9. Zur verliersicheren Befestigung der Spannbrücke 4 am Widerlager 9 sind (nicht dargestellte) Schrauben vorgesehen. Es ist jedoch auch denkbar, die Spannbrücke 4 mit dem Widerlager 9 über andere Verbindungsmittel verliersicher aneinander zu befestigen. Denkbar ist z. B. auf der einen Seite des Achskörpers die Schenkel 5 der Spannbrücke 4 über ein Scharnier mit dem Widerlager 9 zu verbinden und die verbleibenden freien Schenkel 5 mit dem freien Ende des Widerlagers 9 über einen Schraubverschluss oder eine sonstige Verbindungseinrichtung zu verbinden.

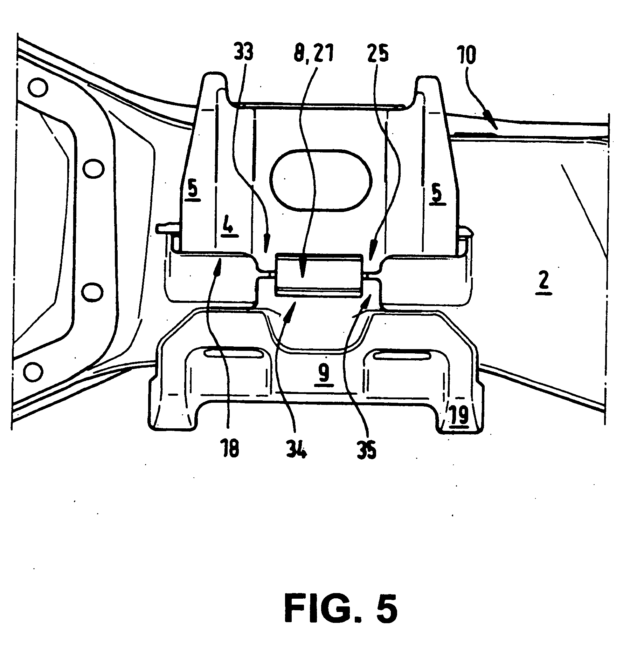

Fig. 5 zeigt in Seitenansicht den Achskörper 2 mit der erfindungsgemäßen Anbindungsvorrichtung in verbautem Zustand 40. Die Anwendungsvorrichtung weist eine Spannbrücke 4 und ein mit der Spannbrücke 4 verbundenes Widerlager 9 auf. Aus der Seitenansicht ist der Schenkel 5 der Spannbrücke 4 zu erkennen, der mit seiner Aufstandsfläche 18 auf dem Fixierungsvorsprung 8 aufliegt. Die Spannbrücke 4 ist dabei über die Nasen 33 an der Zentriereinrichtung 21 des Fixierungsvorsprungs 8 ausgerichtet. Dem Rücken 10 des Achskörpers 2 gegenüberliegend ist das Widerlager 9 zu erkennen, dessen seitliche Wände 19 Nasen 35 tragen, über die das Widerlager 9 am Fixierungsvorsprung 8 zentriert ist. Das Widerlager 9 liegt dabei mit seinen Aufstandsflächen 34 an der vom Rücken 10 des Achskörpers 2 abgewandten Zentriereinrichtung 25 des Achskörpers 2 an.

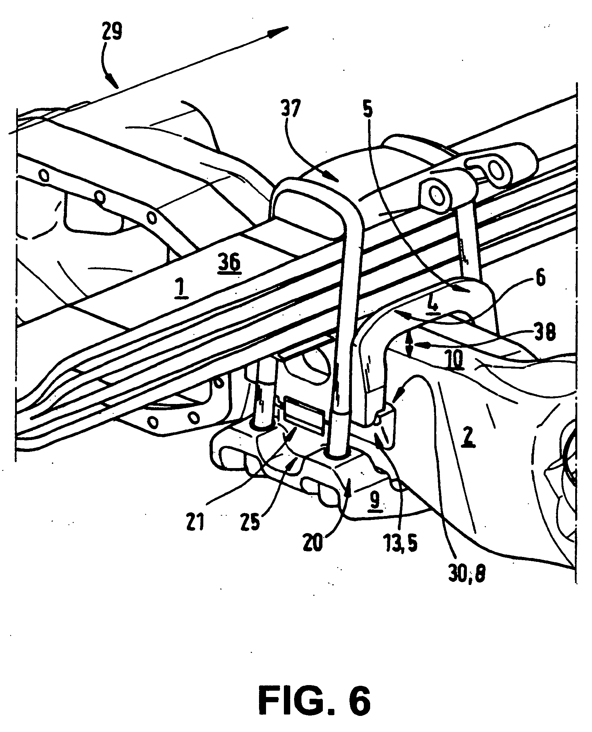

Fig. 6 zeigt in perspektivischer Gesamtansicht die erfindungsgemäße Anbindungsvorrichtung eines Federelements 1 an einem Achskörper 2 einer Nutzfahrzeugachse 3. Die Spannbrücke 4 und das Widerlager 9 sind dabei für den Einsatzbetrieb am Achskörper 2 angeordnet. Auf der Oberseite des Stegs 6 ruht ein Blattfederpaket 36, das über Klammem 37 auf dem Steg 6 positioniert ist, die am Widerlager 9 befestigt sind. In Fig. 6 ist dargestellt, dass die Spannbrücke 4 mit der Unterseite 13 seiner Schenkel 5 auf den Standflächen 30 der Fixierungsvorsprung 8 aufsitzt. Vergleichbar mit den vorhergehenden Figuren ist die Spannbrücke 4 über die Zentriereinrichtung 21 am Achskörper ausgerichtet. Ebenso vergleichbar mit den vorausgehenden Figuren ist das in Fig. 6 gezeigte Widerlager 9 mit seiner Basis 20 an der Zentriereinrichtung 25 des Achskörpers 2 positionsgenau angeordnet. Der Achskörper 2 verläuft in der Fig. 6 quer zur Fahrtrichtung 29. In etwa rechtwinklig zum Achskörper 2 erstreckt sich das Federelement 1 in Form eines Blattfederpakets 36 in Fahrtrichtung 29. Aufgrund seiner Positionierung auf den Standflächen 30 der Fixierungsvorsprünge 8 erhebt sich die Spannbrücke 4 mit seinen Schenkeln 5 über dem Achskörper 2 der Nutzfahrzeugachse 3, sodass der Steg 6 des Achskörpers 2 vom Rücken 10 des Achskörpers 2 um einen Abstand 38 beabstandet ist.

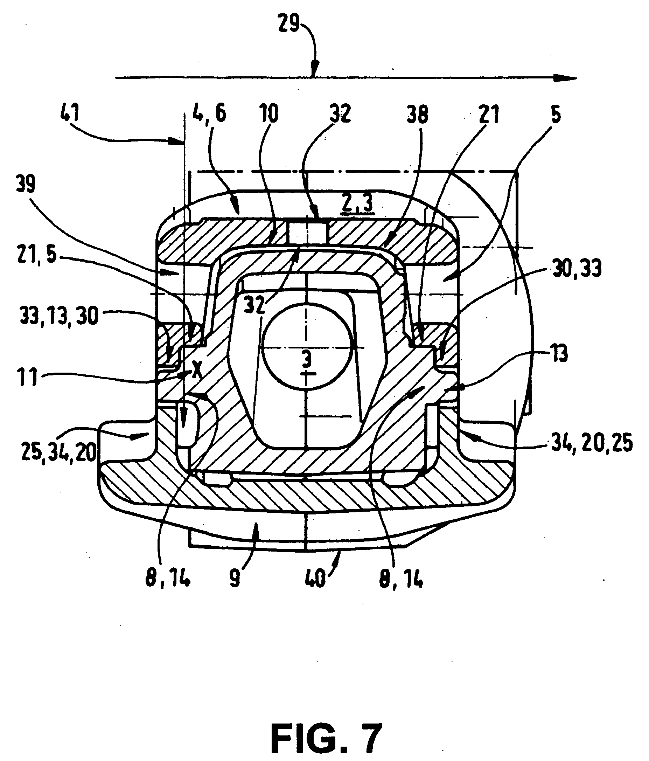

Fig. 7 zeigt einen Schnitt in Fahrtrichtung 29 durch den Achskörper 2 der Nutzfahrzeugachse 3 im Bereich der erfindungsgemäßen Anbindung für das Federelement 1 (nicht gezeigt). Die Fahrzeugachse 3 verläuft im Inneren des Achskörpers 2. Im Bereich der Nulllinie 11 des Achskörpers 2 sind die Fixierungsvorsprünge 8 gezeigt. In Fahrtrichtung 29 ragen in Höhe der Nulllinie 11 des Achskörpers 2 zu beiden Seiten die Fixierungsvorsprünge 8 aus dem Achskörper 2 der Nutzfahrzeugachse 3 heraus. Aus der Profildarstellung 14 des Fixierungsvorsprungs 8 sind die Standflächen 30 des Fixierungsvorsprungs 8 erkennbar, sowie die Zentriereinrichtung 21. Auf den Standflächen 30 der Fixierungsvorsprung 8 ruhen die Schenkel 5 die Spannbrücke 4 mit der jeweiligen Schenkelunterseite 13 auf. Zur Zentrierung der Schenkel 5 der Spannbrücke 4 gegenüber der Zentriereinrichtung 21 des Fixierungsvorsprungs 8 sind die Nasen 33 der Schenkel 5 vorgesehen. An der vom Rücken 10 des Achskörpers 2 abgewandten Seite des Achskörpers 2 ist das Widerlager 9 abgebildet, das mit seinen Aufstandsflächen 34 der Basis 20 am Achskörper 2 anliegt. Der positionsgenauen Ausrichtung des Widerlagers 9 gegenüber dem Achskörper 2 dienen dabei die Zentriereinrichtungen 25. Oberhalb des Rückens 10 des Achskörpers 2 ist in der Fig. 7 die Spannbrücke 4 mit seinen Schenkeln 5 dargestellt. Zur Gewichtserleichterung ist in den Schenkeln 5 der Spannbrücke 4 eine Bohrung 39 vorgesehen, die in Fahrtrichtung 29 verläuft. Erfindungsgemäß weist der Steg 6 der Spannbrücke 4 im verbauten Zustand 40 gegenüber dem Rücken 10 des Achskörpers 2 einen Abstand 38 auf. Hierdurch ist zu erkennen, dass die Krafteinleitung 41, die durch das (nicht gezeigte) Federelement 1 über die Aufnahmeeinrichtung 32 des Stegs 6 nicht direkt und vertikal in den Rücken 10 des Achskörpers 2 eingeleitet wird, sondern über die Schenkel 5 der Spannbrücke 4 im Bereich der Nulllinie 11 ain die Fixierungsvorsprünge 8 des Achskörpers 2. In Fig. 7 ist zwischen dem Steg 6 der Spannbrücke 4 und dem Rücken 10 des Achskörpers 2 der Abstand 38 erkennbar.

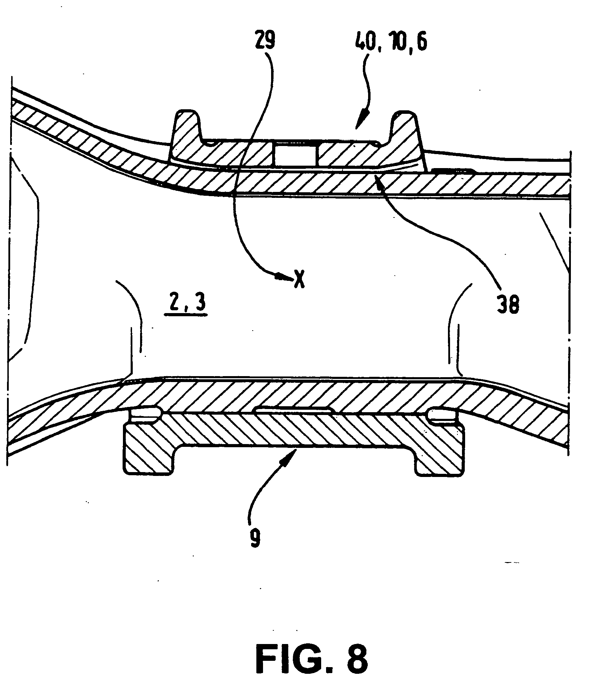

Fig. 8 zeigt einen Ausschnitt eines Längsschnitts quer zur Fahrtrichtung 29 durch den Achskörper 2, bei dem die erfindungsgemäße Anbindungsvorrichtung für das (nicht dargestellte) Federelement 1 im verbauten Zustand 40 gezeigt ist. Fig. 8 zeigt das Widerlager 9 auf der vom Rücken 10 des Achskörpers 2 abgewandten Seite der Nutzfahrzeugachse 3 sowie den Steg 6 der Spannbrücke 4 mit seinem Abstand 38 gegenüber dem Rücken 10 des Achskörpers 2.

### Bezugsziffernliste

- 1: Federelement
- 2: Achskörper
- 3: Nutzfahrzeugachse
- 4: Spannbrücke
- 5: Schenkel
- 6: Steg
- 7:
- 8: Fixierungsvorsprung
- 9: Widerlager
- 10: Oberseite bzw. Rücken des Achskörpers
- 11: Nulllinie
- 13: Schenkelunterseite
- 14: Profil des Fixierungsvorsprungs
- 15: Unterer Bereich des Achskörpers
- 16: Oberes Ende
- 17: Unteres Ende
- 18: Aufstandsfläche
- 19: Seitliche Wand
- 20: Basis
- 21: Zentriereinrichtung am Fixierungsvorsprung
- 22: Ausgleichsachskessel
- 23:
- 24: Achskörper Form
- 25: Zentriereinrichtung an Achskörper
- 27: Aufnahme an Radträger
- 28: gedachte Linie
- 29: Fahrtrichtung
- 30: Standfläche
- 31:
- 32: Aufnahmeeinrichtung an Steg
- 33: Nase an Schenkel
- 34: Aufstandsfläche an Widerlage
- 35: Nase an Widerlager
- 36: Blattfederpaket
- 37: Klammer
- 38: Abstand
- 39: Bohrung in Schenkel
- 40: verbauter Zustand
- 41: Krafteinleitung

## Patentansprüche

1. Nutzfahrzeug, dessen Achskörper (2) über Federelemente (1) am Fahrgestellrahmen gelagert sind, wobei jedes Federelement (1) mit einer, zwei Schenkel (5) aufweisenden Spannbrücke (4) verbunden ist, von denen in Fahrtrichtung (29) gesehen, jeweils der eine Schenkel (5) vorne und der andere Schenkel (5) hinten am Achskörper (2) anliegt und beide Schenkel (5) über einen Steg (6) mit einander verbunden sind, wobei jeder Schenkel (5) an einem an einer Längsseite des Achskörpers (2) befestigten Fixierungsvorsprung (8) fixiert und befestigt ist und der Steg (6) von der Oberseite (10) des Achskörpers (2) beabstandet ist, wobei an der vom Steg (6) abgewandten Seite des Achskörpers (2) ein Widerlager (9) angeordnet ist, das den Achskörper (2) überspannt, wobei eine vom Federelement (1) ausgehende vertikale Kraft (41) über den Schenkel (5) in den Fixierungsvorsprung (8) des Achskörpers (2) gerichtet ist, wobei der Fixierungsvorsprung (8) an seiner Oberseite eine Aufstandsfläche (30) für den Schenkel (5) aufweist, **dadurch gekennzeichnet, dass** der Fixierungsvorsprung (8) sich nach unten zum Achskörper (2) hin verjüngt und an dem Fixierungsvorsprung (8) wenigstens eine Zentriereinrichtung (21) vorgesehen ist, wobei die Kontur der Unterseite des Schenkels (5) und das Profil (14) des Fixierungsvorsprungs (8) mit einander korrespondieren.

2. Nutzfahrzeug nach Anspruch 1, **dadurch gekennzeichnet, dass** das Widerlager (9) den Achskörper (2) überspannt und dabei die Schenkel (5) mit einander verbindet.

3. Nutzfahrzeug nach einem oder mehreren der vorangegangenen Ansprüche, **dadurch gekennzeichnet, dass** der Fixierungsvorsprung (8) im Bereich der Nulllinie (11) des Achskörpers (2) angeordnet ist.

4. Nutzfahrzeug nach einem oder mehreren der vorangegangenen Ansprüche, **dadurch gekennzeichnet, dass** an der Spannbrücke (4) wenigstens eine Zentriereinrichtung vorgesehen ist.

5. Nutzfahrzeug nach einem oder mehreren der vorangegangenen Ansprüche, **dadurch gekennzeichnet, dass** am Widerlager (9) wenigstens eine Zentriereinrichtung vorgesehen ist.

## Claims

1. A commercial vehicle, the axle beams (2) of which are mounted via spring elements (1) on the chassis frame, each spring element (1) being connected to a clamping bridge (4) which has two limbs (5), of which, as viewed in the driving direction (29), in each case the one limb (5) at the front and the other limb (5) at the rear bear against the axle beam (2) and both limbs (5) are connected to one another via a web (6), each limb (5) being fixed and fastened to a fixing projection (8) which is fastened to a longitudinal side of the axle beam (2), and the web (6) being spaced apart from the upper side (10) of the axle beam (2), an abutment (9) which spans the axle beam (2) being arranged on that side of the axle beam (2) which faces away from the web (6), a vertical force (41) which emanates from the spring element (1) being directed via the limb (5) into the fixing projection (8) of the axle beam (2), the fixing projection (8) having a bearing face (30) for the limb (5) on its upper side, **characterized in that** the fixing projection (8) tapers downwards towards the axle beam (2), and at least one centring devise (21) is provided on the fixing projection (8), the contour of the underside of the limb (5) and the profile (14) of the fixing projection (8) corresponding with one another.

2. The commercial vehicle according to Claim 1, **characterized in that** the abutment (9) spans the axle beam (2) and in the process connects the limbs (5) to one another.

3. The commercial vehicle according to either or both of the preceding claims, **characterized in that** the fixing projection (8) is arranged in the region of the zero line (11) of the axle beam (2).

4. The commercial vehicle according to one or more of the preceding claims, **characterized in that** at least one centring device is provided on the clamping bridge (4).

5. The commercial vehicle according to one or more of the preceding claims, **characterized in that** at least one centring device is provided on the abutment (9).

## Revendications

1. Véhicule utilitaire, dont le corps d'essieu (2) est supporté par le biais d'éléments de ressort (1) sur le châssis, chaque élément de ressort (1) étant connecté à un pont de serrage (4) présentant deux branches (5), dont l'une (5), vu dans la direction de conduite (29), s'applique à l'avant et dont l'autre (5) s'applique à l'arrière contre le corps d'essieu (2), les deux branches (5) étant connectées l'une à l'autre par le biais d'une âme (6), chaque branche (5) étant fixée et attachée à une saillie de fixation (8) fixée à un côté longitudinal du corps d'essieu (2) et l'âme (6) étant espacée du côté supérieur (10) du corps d'essieu (2), une butée (9) étant disposée au niveau du côté du corps d'essieu (2) opposé à l'âme (6), laquelle butée s'étend au-dessus du corps d'essieu (2), une force verticale (41) partant de l'élément de ressort (1) étant orientée par le biais de la branche (5) dans la saillie de fixation (8) du corps d'essieu (2), la saillie de fixation (8) présentant au niveau de son côté supérieur une surface d'appui (30) pour la branche (5), **caractérisé en ce que** la saillie de fixation (8) se rétrécit vers le bas vers le corps d'essieu (2) et au moins un dispositif de centrage (21) est prévu au niveau de la saillie de fixation (8), le contour du côté inférieur de la branche (5) et le profilé (14) de la saillie de fixation (8) se correspondant mutuellement.

2. Véhicule utilitaire selon la revendication 1, **caractérisé en ce que** la butée (9) s'étend pardessus le corps d'essieu (2) et relie ainsi les branches (5) l'une à l'autre.

3. Véhicule utilitaire selon l'une ou plusieurs des revendications précédentes, **caractérisé en ce que** la saillie de fixation (8) est disposée dans la région de la ligne zéro (11) du corps d'essieu (2).

4. Véhicule utilitaire selon l'une ou plusieurs des revendications précédentes, **caractérisé en ce qu'**au moins un dispositif de centrage est prévu au niveau du pont de serrage (4).

5. Véhicule utilitaire selon l'une ou plusieurs des revendications précédentes, **caractérisé en ce qu'**au moins un dispositif de centrage est prévu au niveau de la butée (9).
